# EUROPEAN PATENT APPLICATION

(11) **EP 4 621 683 A1**
(43) Date of publication of application: **24.09.2025**
(21) Application number: 24164714.8
(22) Date of filing: 20.03.2024
(51) Int. Cl.: G06Q 20/06, G06Q 20/38, G06Q 20/40, H04L 9/32, H04L 9/00

(54) **SECURE DIGITAL CURRENCY SERVICE UNIT**

(71) Applicant: Giesecke+Devrient advance52 GmbH, 81677 München (DE)
(72) Inventor: Hupel, Lars, 81677 München (DE)
(74) Representative: Giesecke+Devrient IP

(57) **Abstract**

A secure digital currency service unit (2), comprising
- a digital currency wallet (21) for a digital currency of a digital currency system (1);
- a creation unit (29) configured to create a smart contract in a separate blockchain structure (3),

wherein the separate blockchain structure includes a smart contract (32) for a digital asset, and
wherein the digital asset is assignable to a blockchain account (38; 39) of the separate blockchain structure (3).

A digital currency asset management unit (25) of the secure digital currency service unit (2) manages a digital currency asset type in the blockchain structure (3), a digital currency asset (30) of the digital currency asset type representing in a one-to-one relationship the digital currency of the digital currency system (1) in the blockchain structure (3),
wherein the smart contract (32) includes one or more of the digital currency assets (30) of the digital currency asset type, and
wherein the digital currency wallet (21) is a collateral digital currency wallet holding digital currency of the digital currency system (1) as a collateral for the one or more digital currency assets (30) in the smart contract (32).

## Description

The invention relates to a secure digital currency service unit, a method in such a unit and a system comprising a digital currency system, a separate blockchain structure and the secure digital currency service unit.

In the field of digital currency systems account-based systems and token-based systems form different approaches well known in the art.

Many of the recent account-based systems use blockchains, wherein ownership of the digital currency is transferred within the blockchain, e.g. by changing the assignment from one account to another account.

In token-based digital currency systems typically a token is transferred between secure digital currency transaction units or wallets. For example EP 3 671 514 B1, WO 2020/212331 A1, WO 2021/170646 A1, WO 2023/011758 A1 and WO 2023/011761 A1 disclose different aspects of such digital currency systems.

Smart contracts are common in blockchains, but may also be implemented at least similarly in blockchainless systems. WO 2023/046317 A1 for example proposes to integrate a conditional transaction into a digital currency token wallet and WO 2022/233454 A1 shows a register adapted for registering a masked token together with a time limit.

According to an object of the invention a secure digital currency service unit shall be provided which improves flexibility, preferably at the same time improving security and/or improving performance.

The above-identified objectives are solved with the features of the independent claims. Further advantageous embodiments are described in the dependent claims.

According to an aspect of the present invention, there is provided a secure digital currency service unit, comprising
- a digital currency wallet for a digital currency of a digital currency system;
- a creation unit configured to create a smart contract in a separate blockchain structure,

wherein the separate blockchain structure includes a smart contract for a digital asset, and
wherein the digital asset is assignable to a blockchain account of the separate blockchain structure.

The secure digital currency service unit further comprises a digital currency asset management unit managing a digital currency asset type in the blockchain structure. A digital currency asset of the digital currency asset type representing in a one-to-one relationship the digital currency of the digital currency system in the blockchain structure. The smart contract includes one or more of the digital currency assets of the digital currency asset type. The digital currency wallet is a collateral digital currency wallet holding digital currency of the digital currency system as a collateral for the one or more digital currency assets in the smart contract.

The present approach enables the use of the digital currency assets in smart contracts particularly with the full flexibility provided by smart contracts in the blockchain structure. Moreover, adaptations in the digital currency system are not required. The security in the digital currency system remains untouched, since the digital currency is held in the digital currency collateral wallet and held therein only (particularly compared to solutions publishing at least parts of the digital currency data elements in the blockchain). The separate blockchain is separate from the digital currency system. It thus provides an independent smart contract protocol. The independent smart contract protocol may be selected to add smart contract functionality missing in the digital currency system.

Preferably at least one of (or multiple of) the digital currency assets is assigned to a blockchain account, particularly to another smart contract, to a blockchain account of the digital currency service unit or to a dedicated digital currency blockchain account of the blockchain structure. More preferably the digital currency asset(s) can only be assigned to these or two of these blockchain accounts, such as the other smart contract and the blockchain account of the digital currency service unit only or the blockchain account of the digital currency service unit and the dedicated digital currency blockchain account only. The digital currency asset(s) are provided in order to be assignable to other smart contracts and/or to dedicated digital currency blockchain accounts. It should be noted that smart contracts also form a blockchain account.

In particular, the digital currency asset(s) may be initially assigned to a blockchain account of the digital currency service unit. They may be reassigned to the blockchain account of the digital currency service unit, for example after having been assigned to one or more of the above or other blockchain accounts. A dedicated digital currency blockchain account may be used for assignment of digital currency assets and/or is provided for digital currency assets. It can be used exclusively for digital currency assets or for digital currency assets and other assets. Preferably, dedicated digital currency blockchain accounts have a link to a participant of the digital currency system and/or a wallet identifier of a digital currency wallet of the digital currency system. Of course, the separate blockchain structure may further include normal blockchain accounts. In first variants assignment of the digital currency asset(s) to normal blockchain accounts (not having the link and/or the wallet identifier)would be allowed, however in preferred variants no assignment of the digital currency asset(s) to normal blockchain accounts would be allowed.

The digital currency for which the digital currency asset is included in the smart contract may be referred to as the primary digital currency. Accordingly the digital currency system may be referred to as the primary digital currency system.

An additional advantage of the present approach is the improved ability to provide a collateral confirmation. The digital currency service unit may be configured to provide a collateral confirmation of the digital currency system the digital currency held in the collateral digital currency wallet, preferably for the sum of the digital currency. A collateral confirmation for deposit money held in a bank account of a commercial bank, treasury bills or in other forms of collaterals, such as liquid assets, are complicated to be produced and thus also tend to be outdated.

The collateral confirmation may be provided upon request, e.g. a request by a participant of the blockchain structure. Alternatively it may be provided by the digital currency service unit and stored in the blockchain structure, e.g. in the smart contract or separately. The digital currency service unit, particularly the collateral digital currency wallet, may request a (current) collateral confirmation from the digital currency system, preferably on a regular basis, such as once per hour, once per two hours or daily.

The collateral confirmation refers at least to the digital currency held in the collateral digital currency wallet for the smart contract or in total. The digital currency may be held in the form of one or more digital currency tokens. In case that multiple smart contracts including digital currency assets for the digital currency are created, respective multiple collateral confirmations, a single common collateral confirmation for the multiple smart contracts or a collateral confirmation for the digital currency held in the collateral digital currency wallet in total may be used.

A request for the collateral confirmation is preferably sent to the digital currency system (a collateral conformation unit of the digital currency system) by the collateral digital currency wallet or by the digital currency asset management unit.

The collateral confirmation may comprise at least one digital currency value (monetary value), preferably one or more digital currency values or a sum of digital currency values, and at least one cryptographic signature, preferably a single cryptographic signature or cryptographic signatures for the respective digital currency values.

In variants the collateral digital currency wallet is adapted to replace multiple digital currency tokens, e.g. all tokens held for a smart contract or all tokens held in total, by a single digital currency token (having the sum of the digital currency values of the multiple digital currency tokens as a digital currency value), e.g. for the or each smart contract or for the collateral digital currency wallet respectively. In further variants the collateral confirmation is provided (and requested) for multiple digital currency tokens and includes separate cryptographic signatures per digital currency token, a common cryptographic signature for all digital currency tokens and/or a cryptographic signature for a sum of the digital currency token values.

The collateral confirmation optionally further comprises a timeliness value, such as a timestamp, a challenge or a current blockchain value of the blockchain structure (preferably an existing counter in the blockchain). The digital currency system may receive the timeliness value in a request for the collateral confirmation. The collateral confirmation unit may however also determine the timeliness value itself, e.g. by requesting a timestamp from a timestamp service, reading a challenge value from a predefined challenge source or reading a current blockchain value from the blockchain structure.

The digital currency asset represents in a one-to-one relationship the digital currency of the digital currency system. Hence, the monetary values of the digital currency and the digital currency asset respectively are identical (1 digital currency asset equals 1 digital currency unit; e.g. 1 digital ABC asset is 1 digital ABC cent). In other words: digital currency assets have the (fixed) value of the digital currency and/or a digital currency asset has the value of the currency unit of the digital currency.

In the digital currency system the digital currency is preferably stored/held as a digital currency element. More preferably, the digital currency is stored/held as a digital currency token. Valid digital currency tokens may be registered in a token register, preferably the digital currency token is registered with its token individual/ unique token reference in a token reference register. The digital currency element(s) or token(s) may comprise at least one data element, preferably comprise a value data element and a cryptographic data element. A digital currency wallet may include one or more digital currency element(s) or token(s).

A cryptographic data element of the digital currency (element or) token may be a signature or a token secret, the cryptographic data element preferably being a token-individual/ unique data element. A (unique) token reference may be preferably is derivable from the token-individual cryptographic data element. The token may be registered by its unique token reference. A value data element of the digital currency (element or) token may indicate the number of currency units of the digital currency (e.g. 107 ABC cent).

The digital currency asset management unit may be configured to assign at least one or more digital currency asset(s) in the smart contract to a blockchain account and/or to create or destroy at least one or more digital currency asset(s) in the smart contract.

In preferred variants the digital currency asset management unit is configured to control that the sum of digital currency held as a collateral in the collateral digital currency wallet for the smart contract is greater or equal to the sum of the digital currency assets in the smart contract(s).

The digital currency asset management unit may create one or more digital currency asset(s) in the smart contract. The respective additional digital currency may already be held as a collateral for the smart contract in the collateral digital currency wallet and/or may be added to the collateral for the smart contract. In the step of adding held digital currency may be blocked for the smart contract and/or digital currency may be transferred (from another wallet, such as another wallet of the digital currency service unit or a participant digital currency wallet) to the collateral digital currency wallet. The digital currency asset management unit may destroy one or more digital currency asset(s) in the smart contract. The respective digital currency may remain in the collateral for the smart contract or may be removed from the collateral for the smart contract. In the step of removing the respective digital currency may be unblocked and/or may be transferred from the collateral digital currency wallet (to another digital currency wallet, such as another wallet of the digital currency service unit or a participant digital currency wallet). The digital currency asset management unit may particularly be configured to create a digital currency asset in the smart contract only after the additional digital currency is held as a collateral in the collateral digital currency wallet. The digital currency asset management unit may particularly be configured to remove digital currency from the collateral for the smart contract after a digital currency asset in the smart contract is destroyed in the smart contract.

Advantageously, the digital currency service unit may be configured to determine a wallet identifier for a given blockchain account and/or a blockchain account for a given wallet identifier. This additional property simplifies the use of the digital currency asset(s) for participants. For example, participants of the digital currency system may use wallet identifiers and participants of the blockchain structure may use blockchain accounts. In particular, a participant of the digital currency system/blockchain structure does not need a target blockchain account/wallet identifier but may use a wallet identifier/ blockchain account of the target participant instead.

In a variant the digital currency service unit determines the wallet identifier/ blockchain account internally. In a preferred variant however the digital currency service unit sends a determination request to a blockchain account or wallet identifier determination unit of the digital currency system. The blockchain account or wallet identifier determination unit sends the wallet identifier/blockchain account in response to the request. The wallet identifier/blockchain account may be determined by using a derivation algorithm, particularly deriving a blockchain account based on a wallet identifier, or by using a link list comprising a wallet identifier and a respective (linked) blockchain account. In the most preferred variant, the blockchain account or wallet identifier determination unit of the digital currency system includes a link list for blockchain accounts and wallet identifiers.

In preferred embodiments the digital currency held in the collateral digital currency wallet for the smart contract is blocked for digital currency transfer in the collateral digital currency wallet. For example, a status of the digital currency (token(s)) is set to blocked or a link to the smart contract is added to the digital currency (token(s)) in order to block the digital currency in the collateral digital currency wallet. Alternatively or in addition, the digital currency may be blocked in the digital currency system. The digital currency (reference) register or a separate collateral register of the digital currency system may comprise an indication of the blocked status and/or of the smart contract. Such information may also be used for providing a collateral confirmation, however it could be mentioned, that it would be optional. In each of the above cases a digital currency blocked may not be transferred without previous unblocking. The collateral digital currency wallet may optionally further comprise unblocked digital currency.

Alternatively or in addition, the digital currency service unit may optionally further comprise an active digital currency wallet. The active digital currency wallet may comprise unblocked digital currency. The collateral digital currency wallet may be restricted to (is only used for) transfer digital currency only to/from the active digital currency wallet of the secure digital currency service unit. The collateral digital currency wallet would thus not be allowed to transfer digital currency to (external) participant digital currency wallets of the digital currency system (outside the digital currency service unit).

The digital currency service unit may receive digital currency (one or more token(s)) of the digital currency system (in its active or collateral digital currency wallet) together with a target blockchain account or together with a target wallet identifier. The digital currency service unit assigns one or more digital currency assets to the target blockchain account, optionally determined for the target wallet identifier. Digital currency assets may for example be created in advance or are created on demand/ after receipt of the digital currency. Alternatively, the currency assets assigned may have been reassigned to the digital currency service unit (and not destroyed).

The digital currency service unit may receive one or more digital currency assets (via assignment or transfer request) together with a target blockchain account or a target wallet identifier. The digital currency service unit transfers digital currency (one or more token(s)), particularly from its active or collateral digital currency wallet, to a wallet of the digital currency system having the target wallet identifier, optionally determined for the target blockchain account. Optionally, the received digital currency asset may be destroyed or kept and/or the collateral in the collateral digital currency wallet is amended or not. For example, the received digital currency asset may be destroyed and the digital currency removed from the collateral and sent.

The digital currency service unit may deduct a service fee, e.g. for assignments of digital currency assets. Accordingly, for example a fee portion of the digital currency assets may be assigned to the blockchain account of the digital currency service unit and the remaining digital currency assets are assigned to a target blockchain account. Similarly, the digital currency assets received/sent may be correspondingly higher/lower in value than the digital currency sent/received.

As partly already indicated above, the digital currency asset management unit is preferably configured to control that the one or more digital currency asset(s) is (are) only assigned either to another smart contract, to a blockchain account of the digital currency service unit or to a dedicated digital currency blockchain account.

The digital currency service unit, in particular the digital currency asset management unit and/or the smart contract creation unit, may be configured to control that one or more currency rules of the digital currency system are applied for the digital currency asset in the blockchain structure. The digital currency asset management unit may enforce at least some of these rule(s) in the blockchain structure. For example, the digital currency asset management unit may enforce a transaction limit of the digital currency system (per transfer in the digital currency system => per assignment in the blockchain structure) or a holding limit (per wallet in the digital currency system => per account in the blockchain structure) in an assignment of digital currency assets in the blockchain structure. Another rule may be that digital currency assets may only be assigned to dedicated digital currency blockchain accounts, e.g. having a link to the digital currency system or wallet identifier of the digital currency system. One ore more (of such) currency rules or assignment rules for the blockchain structure may alternatively or in addition be enforced by the smart contract creation unit. The smart contract created may comprise the one or more currency rules and/or assignment rules. For example, a transaction limit, a holding limit and/or a holder restriction, e.g. to dedicated digital currency blockchain accounts and/or smart contracts, could be included into the smart contract by the smart contract creation unit.

As basically at least partly indicated above, the digital currency service unit may be configured to assign at least one of the digital currency assets to a blockchain account and optionally to add digital currency to the collateral of the smart contract in the collateral digital currency wallet, in response to receiving digital currency from a wallet of the of the digital currency system. In addition or alternatively in response to a digital currency transfer request or to an assignment of at least one of the digital currency assets to a blockchain account, the digital currency service unit may be configured to send digital currency to a (participant) wallet of the digital currency system.

The blockchain structure may comprise (multiple) smart contracts each including one or more of the digital currency assets of the digital currency asset type. Preferably, the digital currency service unit manages the smart contracts. Optionally or in addition further digital currency service units may exist in the system, managing their smart contract(s) for the same digital currency asset type. With regard to the collaterals of the multiple smart contracts the digital currency service unit may comprise respective multiple collateral digital currency wallets. Alternatively the collateral digital currency wallet separately holds digital currency for the smart contracts. Separate collateral conformations for the smart contracts may be provided, e.g. a collateral conformation per collateral digital currency wallet or a collateral conformation per smart contract in the collateral digital currency wallet.

The digital currency system preferably is a token-based or account-less digital currency system. The digital currency system may also be referred to as an unchained (and/ or non-DLT) digital currency system, particularly in the sense of not supporting a(ny) blockchain-based smart contract protocol and/or not using a blockchain for storing the digital currency.

The blockchain structure may be an Ethereum-compatible blockchain structure preferably supporting smart contracts according to the ERC 20, ERC 165, ERC 621, ERC 777 and/or ERC 1155 standards. The blockchain structure may be Ethereum, Solana, Cardano or a similar blockchain structure. The blockchain structure may be a blockchain structure with or without an internal blockchain currency.

The blockchain structure may comprise an blockchain-internal currency. In advanced variants the blockchain structure may comprise different digital currency asset types of different digital currency systems (ABC currency assets, DEF currency assets ...).

According to another aspect of the present invention there is provided a method in a in a secure digital currency service unit, comprising the steps:
- holding digital currency of a digital currency system in a digital currency wallet of the digital currency system;
- creating a smart contract in a separate blockchain structure,

wherein the separate blockchain structure includes a smart contract for a digital asset, and
wherein the digital asset is assignable to a blockchain account of the separate blockchain structure.

The method further comprises:
- managing a digital currency asset type in the blockchain structure, a digital currency asset of the digital currency asset type representing in a one-to-one relationship the digital currency of the digital currency system in the blockchain structure,

wherein the smart contract includes one or more of the digital currency assets of the digital currency asset type, and
wherein the digital currency wallet is a collateral digital currency wallet holding the digital currency of the digital currency system as a collateral for the one or more digital currency assets in the smart contract.

The method may be performed as indicated above.

In preferred variants the method comprises
- assigning at least one of the digital currency assets to a blockchain account of the blockchain structure, preferably only to another smart contract, to a blockchain account of the digital currency service unit or to a dedicated digital currency blockchain account; and/ or
- creating or destroying one or more digital currency assets in the smart contract; and/or
- transferring digital currency from/to a digital currency wallet of the digital currency system; and/or
- changing the sum of digital currency held in the collateral digital currency wallet as a collateral for the digital currency assets in the smart contract.

In further variants the method may (also) comprise:
- providing a collateral confirmation for the digital currency held in the collateral digital currency wallet at least for the smart contract; and/or
- determining a wallet identifier of the digital currency system of the for a given blockchain account of the blockchain structure or a blockchain account of the blockchain structure for a given wallet identifier of the digital currency system.

Moreover, the method may comprise
- applying one or more digital currency rules of the digital currency system for the digital currency asset in the blockchain structure; and/or
- reporting to the digital currency system for an digital currency asset assignment in the blockchain structure. For example each assignment or assignments fulfilling a reporting criteria (such as amount or blockchain account property or smart contract type), may be reported to the digital currency system, preferably in reporting format used for reporting digital currency transfers in the digital currency system.

According to still another aspect of the present invention there is provided a digital currency token system comprising digital currency wallets holding digital currency tokens of the digital currency token system, the system comprising a digital currency issuing unit and optionally a token (reference) register.

According to still another aspect of the present invention there is provided a digital currency token system, comprising digital currency wallets holding digital currency tokens of the digital currency token system, and a digital currency issuing unit. The digital currency tokens may be adapted as indicated above. Preferably, they are locally stored in the digital currency wallets and exchangeable between the wallets. The digital currency token may comprise or consist of a token secret and a token value (monetary value).

The digital currency token system now further comprises a holding confirmation unit and/or a blockchain account or wallet identifier determination unit.

The holding confirmation unit is adapted to provide a holding confirmation for multiple digital currency tokens held in a first digital currency wallet, the holding conformation comprising the digital currency value sum of the digital currency tokens and a cryptographic signature of the holding confirmation unit.

The blockchain account or wallet identifier determination unit is configured to
in response to a wallet identifier request, including a blockchain account of a blockchain structure, provide a wallet identifier of the digital currency wallet in the digital currency system for the blockchain account; and/or
in response to a blockchain account request, including a wallet identifier of a digital currency wallet, providing a blockchain account in a blockchain structure for the digital currency wallet.

A digital currency token system which provides a registration confirmation for a single digital currency token is already known. The present holding confirmation unit however provides a holding confirmation for multiple tokens confirming their digital currency value sum with a single cryptographic signature.

The holding confirmation preferably is the collateral confirmation described in more detail above. The holding confirmation optionally further comprises a timeliness value, such as a timestamp, a challenge or a current blockchain value of the blockchain structure (preferably an existing counter in the blockchain). The holding confirmation unit may receive the timeliness value in the request for the holding confirmation. The request is typically sent by the wallet or the unit hosting the wallet. The holding confirmation unit may however also determine the timeliness value, e.g. by requesting a timestamp, reading a challenge value, reading a current blockchain value from the blockchain structure.

The digital currency token system may comprise a digital currency token reference register. The holding confirmation unit may be a subunit of the digital currency token reference register or a separate unit. Typically, token references are registered in the digital currency token reference register by token reference replacement requests. The token reference replacement request may include one or more (m) registered token references and one or more (n) new token references. The token reference replacement request is a value neutral request.

In preferred variants the holding/collateral confirmation is provided with read-only access to the digital currency token reference register or without access to the digital currency token reference register. The holding confirmation unit may have either no access or read-only access to the digital currency token reference register.

The effect of the holding confirmation unit and the blockchain account or wallet identifier determination unit also have been at least partly described in more detail above.

A system may comprise a digital currency system, at least one secure digital currency service unit and a blockchain structure, wherein the digital currency system is a digital currency system as indicated above and/or wherein the at least one secure digital currency service unit is a secure digital currency service unit as described above. The system may comprise multiple secure digital currency service units and/or multiple smart contracts of the above digital currency asset type.

In the following, the invention or further embodiments and advantages of the invention are explained in more detail based on drawings, wherein the drawings describe only some of the possible embodiments of the invention. At least elements drawn with dashed lines are considered as optional elements.

The drawings are not to be regarded as true to scale, and individual elements of the drawings may be shown in exaggeratedly large or exaggeratedly simplified form.
Fig. 1 shows an example of a known secure digital currency service unit; and
Fig. 2 illustrates an embodiment of a secure digital currency service unit.

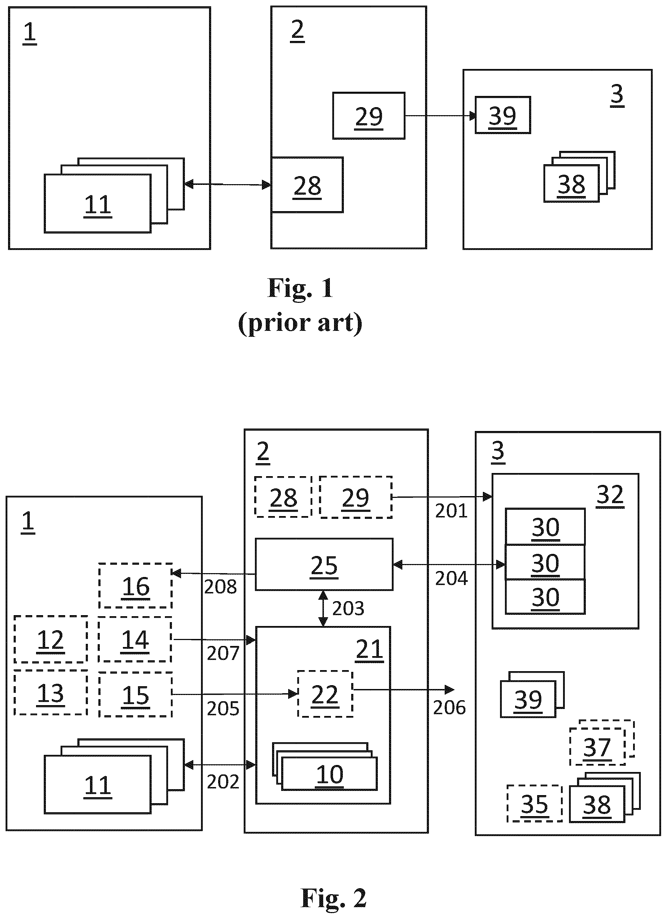

Fig. 1 shows a known system, comprising a digital currency system 1, a digital currency service unit 2 and a blockchain structure 3.

The digital currency system 1 comprises a wallet 11 holding digital currency and exchanging digital currency with other wallets 11, 28. The digital currency service unit 2 comprises a digital currency wallet 28 of the digital currency system 1. Thus it may receive digital currency from the wallet 11 as a payment for an asset to be created as a smart contract 39 on the blockchain structure 3. A smart contract creation unit 28 of the digital currency service unit 2 creates the smart contract 39 in the blockchain structure 3 and assigns the smart contract to the blockchain account indicated in the digital currency transfer. Digital currency system 1 preferably is a digital currency token system.

Fig. 2 shows a solution according to the present solution. The system comprises a digital currency system 1, preferably being a digital currency token system, a secure digital currency service unit 2 and a separate blockchain structure 3. Optional units are illustrated with dashed lines.

The digital currency (token) system 1 comprises digital currency (token) wallets 11. Preferably the digital currency (token) system 1 comprises a digital currency token issuer unit 12 and a digital currency token reference register 13. Examples for such token-based systems have been mentioned above.

The secure digital currency service unit 2 comprises a digital currency asset management unit 25 and a collateral digital currency wallet 21. The digital currency asset management unit 25 manages 204 digital currency assets 30 in a smart contract 32 of a blockchain structure 32. The smart contract 32 is created 201, preferably by a smart contract creation unit 29, for providing a digital asset of a digital currency asset type. A digital currency asset 30 of the digital currency asset type in the blockchain structure 3 represents in a one-to-one relationship the digital currency of the digital currency system 1. Hence, a digital currency asset exactly has the value of the digital currency. The smallest unit in the digital currency system, e.g. 1 digital cent, corresponds to a digital currency asset 30 in the blockchain structure 3. The smart contract 32 includes one or more of the digital currency assets 30 of the digital currency asset type. The collateral digital currency wallet 21 includes digital currency, e.g the digital currency tokens 10, held as a collateral for the smart contract 32/for the digital currency assets 30 in the smart contract 32.

The smart contract 32 may initially include no digital currency assets 30 of the digital currency asset type. The digital currency asset management unit 25 may create or destroy digital currency assets 30 in the smart contract 32. The digital currency asset management unit 25 ensures that the collateral held for the digital currency assets 30 in the collateral digital currency wallet 21 is greater or equal to the sum/number of the digital currency assets 30 in the smart contract 32.

One or more of the digital currency assets 30 are assigned to a blockchain account 35-39. They may be initially assigned to the blockchain account 35 of the digital currency unit 2.

One or more of the digital currency assets 30 may particularly be assigned to another smart contract 39. The digital currency of the digital currency system - by means of the digital currency assets 30 - thus now can be used without further technical limitations in smart contracts 39 of the smart contract standard of the blockchain structure 3. The digital currency asset management unit 25 in a variant for example may be adapted to restrict the assignment of digital currency assets 30 to only other smart contracts 39, optionally fulfilling a criteria, and optionally the blockchain account of the secure digital currency unit 2.

The one ore more digital currency assets 30 may be assigned to dedicated participant blockchain accounts 37. A dedicated digital currency blockchain account 37 is adapted for the assignment of digital currency assets 30, for example by being owned by a participant of the digital currency system or by comprising a corresponding property/marker. A dedicated digital currency blockchain account 37 is linked to a participant wallet 11 of the digital currency system 1. The digital currency asset management unit 25 in a variant for example may be adapted to restrict the assignment of digital currency assets 30 to only dedicated digital currency blockchain account 37. Other restrictions, additionally including the blockchain account of the secure digital currency unit 2 and/or the other smart contracts 39 are possible. The blockchain structure 3 may include participant blockchain accounts 38 to which the digital currency asset 30 would not be assigned.

The secure digital currency service unit 2 provides 206 a collateral confirmation 22. The collateral confirmation 22 could be provided in the smart contract 32, in the blockchain structure 3 or by the digital currency service unit 2 (readable or upon request).

The collateral confirmation 22 could be provided upon (external) request by third parties/participants of the blockchain structure 3. The external request preferably comprises a challenge, such as a random number or a counter, forming a timeliness value for the collateral confirmation 22. A timeliness value (or up-to-date ensurance value) in the collateral confirmation avoids use of old collateral confirmations. The challenge included in the request for the collateral confirmation 22 must be included in the collateral confirmation provided 206.

Instead of providing 206 a current collateral confirmation 22 upon external request, a current collateral confirmation could be retrieved 205 automatically and provided, e.g. by storing it in the smart contract 32, the blockchain structure 3 or the secure digital currency service unit 2. The collateral confirmation 22 will include a timeliness value, such as a timestamp or a counter existing in the blockchain structure 3. The automatic retrieval interval may be above 10 minutes but below 1 day, preferably between 15 minutes and 6 hours.

The collateral confirmation 22 is preferably created by a holding confirmation unit 15, which optionally may be a part of the digital currency token reference register 13.

The collateral confirmation 22 comprises a collateral value, directly or indirectly, and a cryptographic signature of the digital currency system, particularly of the holding confirmation unit 15 or/ the digital currency token reference register 13. The collateral value is preferably directly included as a sum of the digital currency values held as a collateral. The cryptographic signature may be calculated for the collateral value and/or a timeliness value and/or multiple digital currency values (of separate digital currency tokens). Any entity, such as participants of the blockchain structure or an auditing entity, may receive the provided collateral confirmation 22 and verify the signature. In addition it can be verified that the collateral value is greater or equal than the value/number of digital currency assets in the smart contract(s).

The holding confirmation unit 15 and/or the digital currency token reference register 13 may be further adapted to block digital currency tokens in the digital currency system (preferably in the digital currency token reference register 13). For example, blocked digital currency token references in the digital currency token reference register 13 may include a collateral marker, a blocked status or a blockchain account of the smart contract.

Digital currency may be exchanged (digital currency tokens transferred) between digital currency wallets 11, 21, 28 of the digital currency system 1. The digital currency wallets 11 may be hardware wallets, such as smartcards, tokens or other secure elements, mobile phone wallets, e.g. in a SIM, in a TEE or in an operating system of the mobile communication device, or hosted wallets, which are provided/hosted on a server, preferably a wallet provisioning server.

The collateral digital currency wallet 21 may exchange 202 digital currency (tokens) with a wallet 11 of the digital currency system 1. In an alternative variant, the collateral digital currency wallet 21 is restricted to internal exchanges of digital currency (tokens), which are internal in the secure digital currency service unit 2. Hence, it may only exchange digital currency with the active digital currency wallet 28 of the secure digital currency service unit 2. The active digital currency wallet 28 will perform the exchange 202 with other/ external digital currency wallets 11 of the digital currency system 1.

The digital currency system 1 may optionally further include a blockchain account or wallet identifier determination unit 14. The blockchain account or wallet identifier determination unit 14 includes a list of wallet identifiers each linked to a blockchain account. Alternatively, it may include a derivation algorithm for deriving a blockchain account from a given wallet identifier (or vice versa). Hence, a request for a wallet identifier or a blockchain account including the given blockchain account/ given wallet identifier respectively may be received. The requested wallet identifier or blockchain account would be determined by the blockchain account or wallet identifier determination unit 14 and provided 207 in response to the request. The request for a wallet identifier or a blockchain account may be send by the digital currency service unit 2. The blockchain account or wallet identifier determination unit and/or the list and/or the derivation algorithm may alternatively be provided in the secure digital currency service unit 2.

The digital currency system 1 may optionally further includes a transfer report unit 16. The secure digital currency service unit 2 (and/ or the digital currency asset management unit 25) may report 208 a digital currency asset assignment in the separate blockchain structure 3. The transfer report unit 16 may receive reports about digital currency transfers in the digital currency system 1 from wallets 11, 21, 28 of the digital currency system 1 and/or reports about digital currency asset assignments in the separate blockchain structure 3.

The digital currency asset management unit 25 may also be configured to at least partly enforce digital currency system rules, defined for the digital currency in the digital currency system 1, for the digital currency assets 30, particularly enforce them in an assignment step. The digital system rule may be a transaction limit (maximum value per transfer), a holder restriction (owner must have digital currency wallet, e.g. account must be a dedicated digital currency blockchain account 37), a reporting limit (minimum value for report) or a holding limit (maximum value assignment per dedicated digital currency blockchain account 37). Alternatively or in addition the smart contract 32 already includes such or similar digital currency rules. Thereby one or more digital currency rules are automatically followed by the smart contract 32. Hence, the digital currency asset management unit 25 would not have to interfere, e.g. with assignments. The smart contract creation unit 29 and/or digital currency asset management unit 25 adds the digital currency rules into the smart contract 32.

The digital currency asset management unit 25 manages 204 the digital currency assets 30 in the smart contract 32, which includes different substeps such as creation, assignments and destruction. It further controls 203 the collateral in the collateral digital currency wallet 21 and may perform other steps such as collateral confirmation retrieval 205 or collateral confirmation provisioning 206 or digital currency assignment reporting 208 or triggering or performing a smart contract creation 201.

In the following examples for the lifecycle of the digital currency assets 30 and their use are described in more detail. It is assumed therein that digital currency assets 30 may not be assigned to blockchain accounts of participants but only to other smart contracts 39 (and optionally the blockchain account 35 of the digital currency unit 2). The lifecycle and use however may include similar and additional (assignment) steps, if assignment to dedicated digital currency blockchain accounts 37 would be allowed. Further in the examples digital currency tokens 10 are used, although generally the digital currency may be represented differently.

The digital currency asset management unit 25 may have triggered creation 201 of a smart contract 32 for digital currency assets, thus being a smart contract of the digital currency asset type.

In a pre-creation scenario the digital currency asset management unit 25 controls 203 the collateral digital currency wallet 21 to block stored digital currency token(s) 10 having a given digital currency value, e.g. 10 000 units (e.g. cents). In an on-demand creation scenario the collateral digital currency wallet 21 receives one or more digital currency token(s) having a given digital currency value together with or in a request for digital currency assets of the given value to be assigned to a (transaction) smart contract 39. The received digital currency tokens 10 may be automatically blocked or stored and blocked as controlled 203 by the digital currency asset management unit 25.

One (or more) digital currency token(s) may (together - in the sum of their values) have the given digital currency value. The digital currency token(s) 10 can be blocked by being marked as blocked, marked with the smart contract for which they are a collateral or even partially encrypted.

Thereafter the digital currency asset management unit 25 creates digital currency assets 30 for the given digital currency value, e.g. 10 000 digital currency assets, in the smart contract 32. Now the digital currency assets 30 are ready to be assigned to another (transaction) smart contract 39.

The secure digital currency unit 2 (preferably the collateral digital currency wallet 21) retrieves 205 a collateral confirmation 22 from the digital currency system 1, particularly its holding confirmation unit 15. The collateral confirmation 22 confirms that a collateral for the given digital currency value is held. It is provided 206 for being verifiable by interested parties, such as blockchain participants or auditors. The collateral confirmation 22 comprises the signature of the digital currency system and the given digital currency value and optionally a timeliness value, such as a challenge, in any of the above mentioned variants. The collateral confirmation 22 can be provided and/or retrieved upon request or in a given time interval: For example only, a current collateral confirmation is retrieved 205 every 15 minutes and stored in the digital currency service unit 2 or the blockchain structure 3.

Upon request (pre-creation scenario), e.g. by a blockchain participant, or due to the above request (on-demand scenario) multiple of the digital currency assets 30 are assigned to the smart contract 39, which preferably is a transaction smart contract. If a condition is fulfilled the transaction is executed. The condition could be reaching a point of time, occurrence of a defined blockchain event (specific assignment to a defined blockchain account or specific value in a data element of the blockchain structure 3), fulfillment of an external trigger (value on a defined internet address or value in a defined third system). According to the transaction the digital currency assets 30 shall be assigned to a dedicated digital currency blockchain account 37, if the condition is fulfilled.

The digital currency asset management unit 25 either prevents this unallowed assignment or detects it. The digital currency asset management unit 25 reassigns 204 the digital currency assets 30 to the blockchain account of the digital currency unit 2. The wallet identifier of the digital currency wallet 11 for the dedicated digital currency blockchain account 37 is requested and received 205 from the blockchain account or wallet identifier determination unit 14. One or more digital currency tokens 10, having the digital currency value of the digital currency assets 30 previously assigned in the blockchain structure 3, are transferred 202 to the digital currency wallet 11 having the determined wallet identifier. The wallets 11, 21 preferably registers their newly created digital currency tokens, which are created in or after the transfer, in the token reference register 13. Furthermore, they preferably both report the digital currency transfer to the transfer report unit 16.

The digital currency asset management unit 25 may destroy the re-assigned digital currency assets 30 and change the collateral held in the collateral by unblocking digital currency tokens and/or transferring them in the above digital currency transfer. Alternatively, the digital currency asset management unit 25 may transfer digital currency tokens 10, which are not held as collateral (unblocked) and/or destroy the re-assigned digital currency assets 30 in the smart contract 32 without lowering the collateral held for the smart contract 32.

In case the assignment to dedicated digital currency blockchain accounts 37 would be allowed, the above steps may follow upon request of transfer to a/his digital currency wallet by the blockchain participant. Participants can assign digital currency assets from their dedicated digital currency blockchain accounts 37 to another dedicated digital currency blockchain account 37. A digital currency asset assignment report may be send 208 to the digital currency system 1/the transfer report unit 16. They also can return the digital currency asset 30 to the secure digital currency service unit 2 and request transfer of digital currency to either their digital currency wallet 11 or to a digital currency wallet 11 of another participant.

### REFERENCE SIGNS

- 1: digital currency system
- 2: digital currency service unit
- 3: blockchain structure

- 11: participant digital currency wallet
- 28: service unit digital currency wallet
- 29: smart contract creation unit
- 38: blockchain account
- 39: smart contract

- 10: digital currency element/token
- 12: digital currency issuing unit
- 13: digital currency reference register
- 14: a blockchain account or wallet identifier determination unit
- 15: holding/collateral confirmation unit
- 16: transfer report unit

- 21: collateral digital currency wallet
- 22: collateral confirmation
- 25: digital currency asset management unit

- 30: digital currency asset
- 32: smart contract for digital currency assets
- 35: service unit blockchain account
- 37: dedicated digital currency blockchain account

- 201: smart contract creation
- 202: digital currency transfer
- 203: collateral wallet management
- 204: digital currency asset creation/ destruction
- 205: collateral confirmation reception
- 206: collateral confirmation provisioning
- 207: wallet identifier/account determination
- 208: digital currency asset assignment reporting

## Claims

1. A secure digital currency service unit (2), comprising
- a digital currency wallet (21) for a digital currency of a digital currency system (1);
- a creation unit (29) configured to create a smart contract in a separate blockchain structure (3),
wherein the separate blockchain structure includes a smart contract (32) for a digital asset, and
wherein the digital asset is assignable to a blockchain account (38; 39) of the separate blockchain structure (3);
**characterized by**
- a digital currency asset management unit (25) managing a digital currency asset type in the blockchain structure (3), a digital currency asset (30) of the digital currency asset type representing in a one-to-one relationship the digital currency of the digital currency system (1) in the blockchain structure (3),
wherein the smart contract (32) includes one or more of the digital currency assets (30) of the digital currency asset type, and
wherein the digital currency wallet (21) is a collateral digital currency wallet holding digital currency of the digital currency system (1) as a collateral for the one or more digital currency assets (30) in the smart contract (32).

2. The secure digital currency service unit (2) of claim 1, **characterized in that** at least one of the digital currency assets (30) is assigned to another smart contract (39), to a blockchain account (35) of the digital currency service unit (2) or to a dedicated digital currency blockchain account (37).

3. The secure digital currency service unit (2) of one of the preceding claims, **characterized in that** the digital currency service unit (2) is configured to provide a collateral confirmation (22) of the digital currency system (1) for the digital currency held, preferably held for the smart contract (32) or held in total, in the collateral digital currency wallet (21).

4. The secure digital currency service unit (2) of one of the preceding claims, **characterized in that** the digital currency asset management unit (25) is configured to control that the sum of digital currency held in the collateral digital currency wallet (21) for the smart contract (32) is greater or equal to the sum of the digital currency assets (30) in the smart contract (32).

5. The secure digital currency service unit (2) of one of the preceding claims, **characterized in that** the digital currency service unit (2) is configured to determine a wallet identifier for a given blockchain account and/or a blockchain account for a given wallet identifier.

6. The secure digital currency service unit (2) of one of the preceding claims, **characterized in that**
- the digital currency held in the collateral digital currency wallet (21) for the smart contract (32) is blocked for digital currency transfer in the collateral digital currency wallet (21) and/or blocked for digital currency transfer in the digital currency system (1), wherein the collateral digital currency wallet (21) optionally further comprises unblocked digital currency; and/or
- the digital currency service unit (2) further comprises an active digital currency wallet (28), preferably the active digital currency wallet (28) comprising unblocked digital currency and/or the collateral digital currency wallet (21) is only used for digital currency transfer to the active digital currency wallet (28).

7. The secure digital currency service unit (2) of one of the preceding claims, **characterized in that** the secure digital currency service unit (2), particularly the digital currency asset management unit (25) and/ or the smart contract creation unit (29), is configured to apply digital currency asset assignment rules for the blockchain structure (3) and/or currency rules of the digital currency system (1), wherein preferably:
the digital currency asset assignment rules for the blockchain structure (3) and/or the currency rules of the digital currency system (1) are included in the smart contract (32) created by the smart contract creation unit (29); and/or
the digital currency asset management unit (25) is configured to
- control that the digital currency asset (30) is only assigned either to another smart contract (39), to a blockchain account (35) of the digital currency service unit (2) or to a dedicated digital currency blockchain account (37); and/or
- control that one or more currency rules of the digital currency system (1) are applied for the digital currency asset (30) in the blockchain structure (3).

8. The secure digital currency service unit (2) of one of the preceding claims, **characterized in that** the digital currency service unit (2) is configured to
- in response to receiving digital currency from a wallet (11) of the of the digital currency system (1) or, assign at least one of the digital currency assets (30) to a blockchain account (38; 39) and optionally add digital currency to the collateral of the smart contract (32) in the digital currency wallet (21); and/or
- in response to an digital currency transfer request or to an assignment of at least one of the digital currency assets (30) to a blockchain account (35; 37; 38; 39) send digital currency to a wallet (11) of the digital currency system (1).

9. The secure digital currency service unit (2) of one of the preceding claims, **characterized in that** the blockchain structure (3) comprises smart contracts (32) each including one or more of the digital currency assets (30) of the digital currency asset type; wherein preferably the digital currency service unit (2) comprises multiple collateral digital currency wallets (21) respectively and/or the collateral digital currency wallet (21) separately holds digital currency for the smart contracts (32) and/or the digital currency service unit (2) provides separate collateral confirmations (22) for the smart contracts (32).

10. A method in a secure digital currency service unit (2), comprising the steps:
- holding digital currency (10) of a digital currency system (1) in a digital currency wallet of the digital currency system (1);
- creating (201) a smart contract (32) in a separate blockchain structure (3),
wherein the separate blockchain structure includes a smart contract (32) for a digital asset, and
wherein the digital asset is assignable to a blockchain account (35-39) of the separate blockchain structure (3);
**characterized by**
- managing (204) a digital currency asset type in the blockchain structure (3), a digital currency asset (30) of the digital currency asset type representing in a one-to-one relationship the digital currency of the digital currency system (1) in the blockchain structure (3),
wherein the smart contract (32) includes one or more of the digital currency assets (30) of the digital currency asset type, and
wherein the digital currency wallet (21) is a collateral digital currency wallet holding the digital currency (10) of the digital currency system (1) as a collateral for the one or more digital currency assets (30) in the smart contract (32).

11. The method according to claim 10, **characterized by**
- assigning at least one of the digital currency assets (30) to a blockchain account (35;37;38;39) of the blockchain structure (3), preferably only to another smart contract (39), to a blockchain account (35) of the digital currency service unit (2) or to dedicated digital currency blockchain account (37); and/or
- creating or destroying one or more digital currency assets (30) in the smart contract (32); and/ or
- transferring (205) digital currency from/to a digital currency wallet (11) of the digital currency system (1); and/or
- changing (203) the sum of digital currency held in the collateral digital currency wallet (21) as a collateral for the digital currency assets (30) in the smart contract (32).

12. The method according to claim 10 or 11, **characterized in that**
- providing (206) a collateral confirmation (22) for the digital currency held in the collateral digital currency wallet (21) at least for the smart contract (32); and/or
- determining (207) a wallet identifier of the digital currency system (1) of the for a given blockchain account (37) of the blockchain structure (3) or a blockchain account (37) of the blockchain structure (3) for a given wallet identifier of the digital currency system (1).

13. The method according to one of claims 10 to 12, **characterized by**
- applying one or more digital currency rules of the digital currency system (1) for the digital currency asset (30) in the blockchain structure (3); and/or
- reporting (208) to the digital currency system (1) for an digital currency asset assignment in the blockchain structure (3).

14. A digital currency token system (1) comprising
- digital currency wallets (11) holding digital currency tokens (10) of the digital currency token system (1); and
- a digital currency issuing unit (12);
**characterized by**
- a holding confirmation unit (13; 15) adapted to provide a holding confirmation (22) for multiple digital currency tokens (10) held in a first digital currency wallet (11, 21),
the holding conformation comprising the digital currency value sum of the digital currency tokens (10) and a cryptographic signature of the holding confirmation unit (15), optionally further comprising a timeliness value, such as a timestamp or a challenge;
the holding confirmation preferably being a collateral confirmation for a smart contract (32) in a separate blockchain structure (3) including digital currency assets (32) representing in a one-to-one relationship the digital currency of the digital currency token system (1) in the separate blockchain structure (3); and/or
- a blockchain account or wallet identifier determination unit (14), configured to
in response to a wallet identifier request, including a blockchain account (37) of a blockchain structure (3), providing a wallet identifier of the digital currency wallet (11) in the digital currency system (1) for the blockchain account (37); and/or
in response to a blockchain account request, including a wallet identifier of a digital currency wallet (11), providing a blockchain account (37) in a blockchain structure (3) for the digital currency wallet (11).

15. A system comprising a digital currency system (1), at least one secure digital currency service unit (2) and a blockchain structure (3), wherein the digital currency system (1) is a digital currency system (1) according to claim 14 and/or wherein the at least one secure digital currency service unit (2) is a secure digital currency service unit (2) according to one of claims 1 to 10.
